# EUROPÄISCHE PATENTANMELDUNG

(11) **EP 3 937 039 A1**
(43) Veröffentlichungstag der Anmeldung: **12.01.2022**
(21) Anmeldenummer: 20184702.7
(22) Anmeldetag: 08.07.2020
(51) Int. Cl.: G06F 21/44, G06F 21/64, H04L 29/06

(54) **VERFAHREN ZUR ERWEITERTEN VALIDIERUNG EINES CONTAINERABBILDS**

(71) Anmelder: Siemens Aktiengesellschaft, 80333 München (DE)
(72) Erfinder: Knierim, Christian, 81373 München (DE)

(57) **Zusammenfassung**

Verfahren zur erweiterten Validierung eines Containerabbilds (30), das ein Basisabbild (20) und mindestens eine Anwendungsschicht (32, 33), die mindestens eine Änderungsoperation auf dem Basisabbild (20) ausführt, aufweist, wobei das Verfahren folgende Schritte umfasst:
- Erzeugen (S1) einer eindeutigen kryptografischen Basis-Signatur (21) über das Basisabbild (20) durch eine Herstellervorrichtung (51) eines Herstellers des Basisabbilds (20),
- Bereitstellen (S2) der Basis-Signatur (21) an eine Container-Erzeugungsvorrichtung (52),
- Erzeugen (S3) eines Containerabbildes (30), das mindestens das Basisabbild (20) und die Basis-Signatur (21) umfasst in der Container-Erzeugungsvorrichtung (52),
- Bereitstellen (S4) des Containerabbildes (30) an einen Gastrechner (53),
- Überprüfen (S5) der Basis-Signatur (21) im Containerabbild (30) durch eine Laufzeitumgebung (35, 531) des Gastrechners (53), und
- Ausführen (S6) des Containerabbilds nur dann, wenn die Überprüfung der Basis-Signatur (21) ein positives Prüfergebnis ergibt.

## Beschreibung

Die Erfindung betrifft ein System sowie ein Verfahren zur erweiterten Validierung eines Containerabbildes, das ein Basisabbild und mindestens eine Anwendungsschicht, die mindestens eine Änderungsoperation auf dem Basisabbild ausführt, aufweist und eine computer-implementierten Anwendung oder einen Teil davon bereitstellt.

Computer-implementierte Dienste, im Weiteren auch als Anwendung bezeichnet, können mittels virtueller Container auf einer speziellen Ausführungsumgebung eines Gerätes bereitgestellt werden. Ein solches Gerät kann beispielsweise ein Server in einer zentralen, von mehreren Nutzern gemeinsam verwendeten Serverumgebung sein. Das Gerät kann aber auch ein dezentral am Rand eines Netzwerks angeordnetes Randgerät, auch Edge Device genannt, sein. Dem Gerät wird dabei ein Containerabbild bereitgestellt, aus dem zur Laufzeit mehrere Containerinstanzen generiert werden, die die Funktionen der Anwendung ausführen. Das Containerabbild umfasst ein Basisabbild, in dem Ressourcen, wie beispielsweise Bibliotheken und Programme oder auch ein Paketmanager, enthalten sind. Das Containerabbild umfasst des Weiteren mindestens eine Anwendungsschicht, die eine oder mehrere Änderungsoperationen auf dem Basisabbild ausführt und dadurch die Anwendung bereitstellt. Das Containerabbild ist somit vom Basisabbild abgeleitet. Das Basisabbild und das Containerabbilds werden oftmals durch voneinander unterschiedliche Parteien generiert. Das Basisabbild wird beispielsweise von einem Hersteller der Laufzeitumgebung, auf der der Container betrieben wird, erstellt oder zumindest freigegeben. Das Containerabbild wird dagegen beispielsweise von einem Anbieter der Anwendung erstellt.

Mit der Zeit können Schwachstellen im Basisabbild entdeckt und von einem Angreifer ausgenutzt werden. Um ein auf dem Basisabbild basierendes Containerabbild und damit die Anwendung selbst gegen solche Angriffe zu schützen, muss das Basisabbild kontinuierlich auf Sicherheitslücken überprüft und gepflegt werden. Es kann beispielsweise in regelmäßigen Abständen ein überarbeitetes Basisabbild als neue Version freigegeben werden, das insbesondere bezüglich Sicherheitsanforderungen, aber auch bezügliche einem Funktionsumfang aktualisiert ist.

Ein Anbieter bzw. ein Betreiber des Geräts, auf dem die Anwendung ausgeführt wird, möchte üblicherweise sicherstellen, dass lediglich solche Containerabbilder auf dem Gerät ablaufen, die auf einer vom Hersteller der Laufzeitumgebung freigegebenen, aktuelle Version eines Basisabbilds basieren.

Es ist bekannt ein Containerabbild zu signieren. Die Signatur wir jedoch üblicherweise über den gesamten Inhalt des Containerabbilds gebildet und gibt somit keine Auskunft über das beinhaltete Basisabbild. Es sind Softwaretools bekannt, die mittels Schwachstellen-Scanning auf einer Laufzeitumgebung erkennen, ob nicht mehr gewarteten Basisabbilder bzw. Containerabbilder mit nicht mehr gewarteten Basisabbildern betrieben werden. Dazu werden Containerinstanzen zeitlich zyklisch durch das Softwaretool auf Schwachstellen überprüft. Ein Start von nicht mehr aktuellen oder unterstützten Basisabbildern wird dadurch jedoch nicht verhindert. Es ist lediglich möglich das entsprechende Abbild in einer Registry vor dem Start auf der Laufzeitumgebung zu scannen und z.B. abhängig von den gefundenen Schwachstellen den Start auf dem Endgerät verhindern. Des Weiteren sind sogenannte Runtime-Policies bekannt, die vorgeben, welche Container- bzw. Basisabbilder gestartet werden dürfen. Allerdings muss zum Erkennen des Basisabbildes eine oder mehrere Dateien der laufenden Containerinstanz ausgewertet werden. Diese Dateien können aber vom Entwickler des Containerabbilds beliebig modifiziert werden.

Es ist somit die Aufgabe der vorliegenden Erfindung eine Möglichkeit zu schaffen, die Verwendung eines bestimmten Basisabbildes in einem Containerabbild auf dem Gerät bzw. dessen Laufzeitumgebung überprüfen und durchsetzen zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Verfahren zur erweiterten Validierung eines Containerabbilds, das ein Basisbild und mindestens eine Anwendungsschicht, die mindestens eine Änderungsoperation auf dem Basisabbild ausführt, aufweist, wobei das Verfahren folgende Schritte umfasst:
- Erzeugen einer eindeutigen kryptografischen Basis-Signatur über das Basisabbild durch eine Herstellervorrichtung eines Herstellers des Basisabbilds,
- Bereitstellen der Basis-Signatur an eine Container-Erzeugungsvorrichtung,
- Erzeugen eines Containerabbildes, das mindestens das Basisabbild umfasst in der Container-Erzeugungsvorrichtung,
- Bereitstellen des Containerabbildes an einen Gastrechner,
- Überprüfen der Basis-Signatur im Containerabbild durch eine Laufzeitumgebung des Gastrechners und
- Ausführen des Containerabbilds nur dann, wenn die Überprüfung der Basis-Signatur zu einem positiven Ergebnis führt.

Durch eine eigenständige Basis-Signatur des Basisabbilds durch eine Herstellervorrichtung, die unter der Verantwortung und Kontrolle des Herstellers des Basisabbilds steht, und der Überprüfung dieser Basis-Signatur durch die Laufzeitumgebung des Gastrechners kann die konkrete Ausprägung des Basisabbilds, beispielsweise die Version des Basisabbilds erkannt werden und beispielsweise gegenüber einer vorgegebenen Version des Basisabbilds bzw. dessen vorgegebener Basis-Signatur verglichen werden. Ein positives Prüfungsergebnis ergibt sich beispielsweise dann, wenn die Basis-Signatur des Basisabbilds im Containerabbild mit einer vorgegebenen Basis-Signatur übereinstimmt. Stimmt die Basis-Signatur des Basisabbilds im Containerabbild nicht mit der vorgegebenen Basis-Signatur überein, kann beispielsweise eine erste Sicherheitsfunktion ausgeführt werden. Die Container-Erzeugungsvorrichtung ist dabei diejenige Vorrichtung, in der ein Containerabbild erzeugt wird. Die Container-Erzeugungsvorrichtung erstellt das Containerabbild und arbeitet dabei die Basis-Signatur und das Basisabbild in das Containerabbild ein.

In einer vorteilhaften Ausführungsform umfasst das Verfahren die zusätzlichen Verfahrensschritte:
- Erzeugen einer kryptografischen Container-Signatur über das Basisabbild und die Basis-Signatur und mindestens eine Anwendungsschicht des Containerabbildes durch die Container-Erzeugungsvorrichtung, und
- Überprüfung der Container-Signatur durch die Laufzeitumgebung des Gastrechners, und
- Ausführen des Containerabbilds nur dann, wenn die Überprüfung der Container-Signatur ein positives Prüfergebnis ergibt.

Da die Herstellervorrichtung und die Container-Erzeugungsvorrichtung üblicherweise von unterschiedlichen Parteien betrieben werden und auch physisch unterschiedliche Komponenten sind, ist die Container-Signatur unabhängig von der Basis-Signatur und insbesondere sind die Erzeuger der Signaturen voneinander unterschiedlich. Somit kann sichergestellt werden, dass die Container-Erzeugungsvorrichtung nur Containerabbilder mit einer gültig signierten und zugelassenen Basis-Signatur erstellt. Durch das Überprüfen der Container-Signatur kann beispielsweise überprüft werden, ob das Containerabbild von einer vertrauenswürdigen Container-Erzeugungsvorrichtung stammt. Bevorzugt wird zuerst die Container-Signatur überprüft und damit beispielsweise überprüft, ob eine vorbestimmte Anzahl und Ausprägung der Anwendungsschichten sowie die Basisschicht vorhanden sind. Resultiert diese Überprüfung in einem positiven Prüfergebnis wird die Basis-Signatur überprüft und damit noch explizit die gewünschte Version validiert. Bei einem negativen Prüfergebnis kann beispielsweise eine zweite Sicherheitsfunktion, etwa eine Warnmeldung erzeugt und einer Überwachungseinheit bereitgestellt werden.

In einer vorteilhaften Ausführungsform wird die Basis-Signatur über alle Basisschichten des Basisabbilds erzeugt.

Die Basis-Signatur wird somit über den kompletten Datenbestand sowie gegebenenfalls mitgelieferte Meta-Informationen des Basisabbilds erstellt. Dies ermöglicht es sicherzustellen, dass das vollständige Basisabbild in einem Containerabbild verbaut ist. Des Weiteren vereinfacht es die Überprüfung der Basis-Signatur, da beim Verwenden des Basisabbilds in einem Containerabbild die Schichten des Basisabbilds verloren gehen und somit eine Abgrenzung der verschiedenen Basisschichten nur mit erheblichem Aufwand bewerkstelligt werden kann.

In einer vorteilhaften Ausführungsform wird die Basis-Signatur zusätzlich über mindestens eines aus der Auswahl von einem Erzeugungsdatum, einem Namen oder einer Dateigröße der im Basisabbild enthaltenen Dateien oder mindestens einem im Basisabbild enthaltenen Verzeichnis des Abbildes erzeugt.

Dadurch wird mit hoher Wahrscheinlichkeit sichergestellt, dass die gebildete Basis-Signatur einen eindeutigen Wert für das Basisabbild ergibt. Damit kann nicht nur sichergestellt werden, dass damit nicht nur die zum Basisabbild hinterlegten Daten im Container-Dateisystem korrekt sind, sondern auch die Berechtigungen der Dateien stimmen. Beispiel: Ich habe eine Datei /etc/hosts und stelle somit dann sicher, dass auch die Datei dem Benutzer und der Gruppe root:root gehört.

In einer vorteilhaften Ausführungsform wird die Basis-Signatur zusätzlich über mindestens einen weiteren Prüfparameter gebildet und die Überprüfung der Basis-Signatur führt lediglich dann zu einem positiven Prüfergebnis, wenn eine Überprüfung der weiteren Prüfparameter zu einem positiven Prüfergebnis führen.

Über einen solchen weiteren Prüfparameter können beliebige weitere Bedingungen an die Ausführung des Basisabbilds bzw. des gesamten Containerabbilds geknüpft werden. Beispielsweise kann ein Prüfparameter das Vorhandensein bestimmter Anwendungsschichten vorgeben.

In einer vorteilhaften Ausführungsform enthält der mindestens eine weitere Prüfparameter Informationen zu eingeschränkten oder erweiterten Ausführung von zumindest einer Änderungsoperation und/oder eingeschränkten oder erlaubten Verwendung von Ressourcen.

Somit kann über die Basis-Signatur flexibel und umfassend das Ausführungsumfeld des Basisabbildes überprüft werden. Beispielsweise kann spezifiziert werden, dass in nachfolgenden Schichten nur Operationen auf gewisse Unterpfade erlaubt sind oder bestimmte bereitgestellte Binärdateien nicht überschrieben werden dürfen. Die weiteren Prüfparameter müssen beim Start des Containerabbildes ebenfalls von der Laufzeitumgebung im Gastrechner, auf dem der Container validiert werden.

In einer vorteilhaften Ausführungsform wird die Basis-Signatur getrennt von dem Basisabbild in einer für die Container-Erzeugungsvorrichtung zugänglichen Bereitstellungsvorrichtung bereitgestellt.

Somit kann die Basis-Signatur zentral verwaltet und vielen Container-Erzeugungsvorrichtungen zentral und gleichzeitig bereitgestellt werden. Dies vereinfacht die Verwaltung und Verteilung der Basis-Signatur.

In einer vorteilhaften alternativen Ausführungsform wird die Basis-Signatur zusammen mit dem Basisabbild an die Container-Erzeugungsvorrichtung bereitgestellt.

Dies ist insbesondere bei einer Vielzahl von unterschiedlichen Basisabbildern vorteilhaft, da bei einem häufigen Wechsel des Basisabbilds keine Verbindung zu einer externen Bereitstellungsvorrichtung aufgebaut werden muss.

In einer vorteilhaften Ausführungsform ist die Basis-Signatur als einer Metainformation des Basisabbilds oder in einer separaten dem Basisabbild zugeordneten Datei im Containerabbild angeordnet.

Dadurch steht die Basis-Signatur beim Start des Containerabbilds zur Prüfung bereit. Es kann bereits beim Start des Containerabbilds eine weitere Ausführung des Containerabbilds überprüft und wenn notwendig abgebrochen bzw. erste Sicherheitsfunktionen aktiviert werden. Dadurch ist kein separater Verteilmechanismus zur Verteilung der Basis-Signatur notwendig. Die Basis-Signatur ist somit immer verfügbar und nicht von der Verfügbarkeit des Verteilmechanismus abhängig,
In einer vorteilhaften Ausführungsform wird die Basis-Signatur abhängig von einem privaten Signaturschlüssel erzeugt und ein dem privaten Signaturschlüssel zugeordneter öffentlicher Signaturschlüssel dem Gastrechner bereitgestellt.

Durch die Verwendung eines Schlüsselpaars, das aus einem privaten Signaturschlüssel, der lediglich in der Herstellervorrichtung bekannt ist und einem öffentlichen Signaturschlüssel, der nicht auf den privaten Signaturschlüssel zurückschließen lässt, kann die Basis-Signatur einfach durch den zugeordneten öffentlichen Signaturschlüssel im Gastrechner gebildet und mit der bereitgestellten Basis-Signatur verglichen werden. Eine Geheimhaltung des öffentlichen Signaturschlüssels ist nicht notwendig.

In einer vorteilhaften Ausführungsform wird jede Version des Basisabbildes mit einem neuen privaten Signaturschlüssel signiert.

Die Basis-Signatur einer jeden Version des Basisabbilds wird auch hier in der Herstellervorrichtung erzeugt. Somit kann jedes Basisabbild nur mit dem speziell für dieses Basisabbild erzeugten öffentlichen Schlüssel überprüft werden und nicht mit einem beispielsweise wiederverwendeten öffentlichen Schlüssel einer vorhergehenden Basisabbildversion überprüft werden. Dies ermöglicht beispielsweise eine flexible Lizenzverwaltung für jede einzelne Basisabbildversion.

In einer vorteilhaften Ausführungsform wird der öffentliche Signaturschlüssel in einem digitalen Zertifikat an den Gastrechner bereitgestellt und der öffentliche Signaturschlüssel lediglich nach einer erfolgreichen Validierung des digitalen Zertifikates durch den Gastrechner verwendet.

Durch die Verwendung eines digitalen Zertifikates zur Verteilung des öffentlichen Signaturschlüssels kann beispielsweise die Gültigkeitsdauer der Basis-Signatur mit der Gültigkeitsdauer des Zertifikates verbunden und gesteuert werden. Auch weitere Zertifikatparameter, die bei der Überprüfung des Zertifikates validiert werden, können zur Verwaltung der Basis-Signatur herangezogen werden.

In einer vorteilhaften Ausführungsform wird das digitale Zertifikat durch eine vertrauenswürdige Stelle eines Herstellers des Basisabbilds beglaubigt.

So kann beispielsweise für die Validierung des Basisabbildes eine Vertrauenskette entsprechend einem digitalen Zertifikat gemäß dem Standard X.509 aufgebaut werden. Da der Hersteller des Basisabbildes die Signatur beglaubigt, kann über die digitalen Zertifikate eine Zertifikatssperrliste erzeugt und über den öffentlichen Signaturschlüssel der Basis-Signatur zugeordnet werden.

Somit kann eine Sperrliste für Basis-Signaturen realisiert werden. Ist ein Zertifikat für den öffentlichen Signaturschlüssel gesperrt, so führt die Validierung des digitalen Zertifikates durch den Gastrechner zu einem negativen Prüfergebnis und der öffentliche Signaturschlüssel wird dem Gastrechner nicht bereitgestellt. Entsprechend führt die Überprüfung der Basis-Signatur zu einem negativen Prüfergebnis und das Container-Image kann nicht ausgeführt werden. Entsprechend können auch die weiteren Zertifikatparameter bei der Validierung des digitalen Zertifikats im Gastrechner verwendet werden und daraus weitere Bedingungen für die Verwendung des Basisabbilds abgeleitet werden.

Ein zweiter Aspekt der Erfindung betrifft ein System zur erweiterten Validierung eines Containerabbilds, das ein Basisabbild enthält, umfassend eine Herstellervorrichtung, eine Container-Erzeugungsvorrichtung und einen Gastrechner, die derart ausgebildet sind, ein Verfahren mit folgenden Verfahrensschritten auszuführen:
- Erzeugen einer eindeutigen kryptografischen Basis-Signatur über das Basisabbild durch die Herstellervorrichtung des Herstellers des Basisabbilds,
- Bereitstellen der Basis-Signatur an die Container-Erzeugungsvorrichtung,
- Erzeugen eines Containerabbildes, das mindestens das Basisabbild umfasst in der Container-Erzeugungsvorrichtung,
- Bereitstellen des Containerabbildes an den Gastrechner,
- Überprüfen der Basis-Signatur im Containerabbild durch eine Laufzeitumgebung im Gastrechner, und
- Ausführen des Containerabbilds nur dann, wenn die Überprüfung der Basis-Signatur (21) ein positives Prüfergebnis ergibt.

In einem solchen System kann die Nutzung eines Basisabbilds in einem Containerabbild überprüft und durchgesetzt werden.

Bei einem positiven Prüfergebnis wird das Containerabbild auf dem Gastrechner ausgeführt. Bei einem negativen Prüfergebnis kann eine erste Sicherheitsfunktion ausgeführt werden. Dies kann beispielsweise eine Funktion sein, die die weitere Ausführung des Containerabbildes abbricht und/oder einen Warnhinweis ausgibt.

So kann beispielsweise ein Hersteller eine containerbasierten Laufzeitumgebung einem Erzeuger einer Anwendung vorschreiben, welche Basisabbilder auf dem Gastrechner laufen dürfen.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nichts anderes angegeben ist, beziehen sich die Begriffe "erzeugen", "bereitstellen", "überprüfen" und dergleichen vorzugsweise auf Handlungen und/oder Prozesse und/oder Verarbeitungsschritte, die Daten verändern und/oder erzeugen und/oder die Daten in andere Arten überführen, wobei die Daten insbesondere als physikalische Größen dargestellt werden oder vorliegen können, beispielsweise als elektrische Impulse. Das beschriebene System und die darin enthaltenen Vorrichtungen bzw. Rechner bezeichnen elektronische Geräte mit Datenverarbeitungseigenschaften, die mindestens einen Prozessor zur Datenverarbeitung umfassen. Die genannten "Vorrichtungen", beispielsweise die Herstellervorrichtung, die Container-Erzeugungsvorrichtung oder auch der Gastrechner können hardwaretechnisch und/oder auch softwaretechnisch implementiert sein. Bei einer hardwaretechnischen Implementierung kann die jeweilige Einheit als Vorrichtung oder als Teil einer Vorrichtung z. B. als Mikroprozessor ausgebildet sein. Bei einer softwaretechnischen Implementierung kann die jeweilige Einheit als Computerprogrammprodukt, als eine Funktion, als eine Routine, als ein Teil eines Programmcodes oder als ausführbares Objekt ausgebildet sein.

Ein Computerprogrammprodukt wie beispielsweise ein Computerprogrammmittel, kann beispielsweise als Speichermedium oder auch in Form einer herunterladbaren Datei von einem Server in einem Netzwerk bereitgestellt oder geliefert werden.

Ausführungsbeispiele des erfindungsgemäßen Verfahrens sowie des erfindungsgemäßen Systems sind in den Zeichnungen beispielhaft dargestellt und werden anhand der nachfolgenden Beschreibung näher erläutert.
- Fig. 1: ein Containerabbild entsprechend dem Stand der Technik in schematischer Darstellung;
- Fig. 2: ein Ausführungsbeispiel des erfindungsgemäßen Verfahrens als Ablaufdiagramm;
- Fig. 3: ein Ausführungsbeispiel eines erfindungsgemäßen Basisabbilds in schematischer Darstellung;
- Fig. 4: ein Ausführungsbeispiel eines erfindungsgemäßen Containerabbilds in schematischer Darstellung; und
- Fig.: 5 ein Ausführungsbeispiel eines erfindungsgemäßen Systems in Blockdarstellung.

Einander entsprechende Teile sind in allen Figuren mit den gleichen Bezugszeichen versehen.

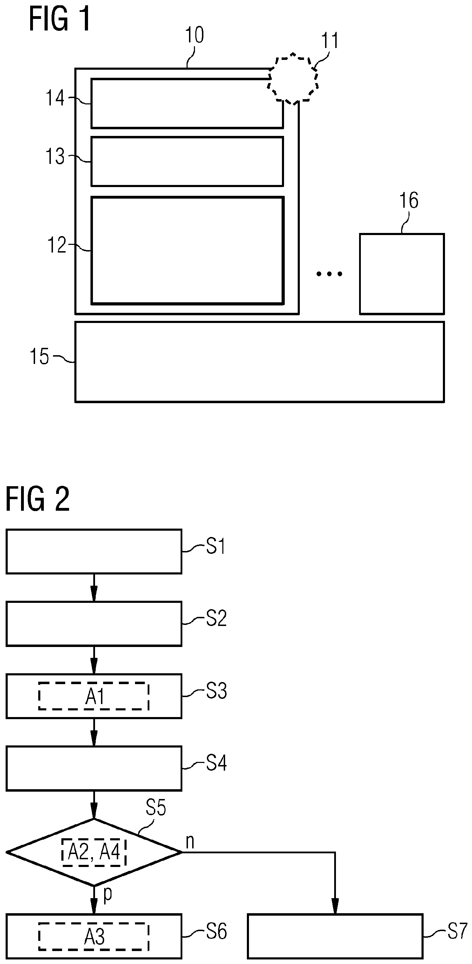

Containerabbilder werden gemäß einer Spezifikation der Open Container Initiative (OCI) in Schichten, auch als Layer bezeichnet, gespeichert. Figur 1 zeigt ein solches Containerabbild 10 entsprechend dem Stand der Technik, das auf einer Laufzeitumgebung 15 eines Gastrechners zusammen mit weiteren Containern 16, soweit vorhanden, ausgeführt wird.

Das Containerabbild 10 ist ein Speicherabbild einer Containerinstanz. Das Containerabbild 10 selbst besteht aus mehreren Schichten 12, 13, 14. Das Containerabbild 10 kann in einem Speicher, einem sogenannten Repositorium, gespeichert werden und mit anderen Nutzern, wie beispielsweise Gastrechnern geteilt werden. Aus dem Containerabbild 10 können mehrere Containerinstanzen gestartet werden. Eine Containerinstanz bezeichnet eine auf dem Containerabbild 10 basierende, gerade ausgeführte Instanz des Abbildes. Sobald die Containerinstanz kein Programm ausführt oder mit seinem Auftrag fertig ist, wird die Containerinstanz automatisch beendet.

Jede Schicht 12, 13, 14 ist Teil des Containerabbilds 10 und enthält Befehle und/oder ein oder mehrere Dateien und Verzeichnisse, die dem Containerabbild hinzugefügt wurden. Die unterste Schicht 12 bildet ein Basisabbild 14. In den darüber liegenden Schichten 13, 14 werden Änderungsoperationen auf diesem Basisabbild 12 ausgeführt. Änderungsoperationen können z. B. das Hinzufügen von Software, das Anlegen von Benutzern und dergleichen sein. Aufgrund der Containerstruktur ist es möglich, nur eine Teilmenge der Operationen auszuführen, indem beim Start der Containerinstanz angegeben wird, dass nur die ersten vorgegebenen Schichten, beispielsweise 12, 13 gestartet werden.

Das Containerabbild 10 wird als Ganzes vom Ersteller des Containerabbilds 10 signiert und die Container-Signatur 11 wird dem Containerabbild 10 zugeordnet. Beim Signieren des Containerabbilds 10 als Ganzes wird die Container-Signatur 11 über den Namen des Containerabbilds 10, ein Tag sowie sämtliche relevanten Schichten gebildet. Das Tag ist ein Alias-Name für eine Kennung der Schicht und bezeichnet eine dedizierte Schicht. Ist auf der Laufzeitumgebung 15 eingestellt, dass nur vertrauenswürdige Containerabbilder gestartet werden sollen, kann eine Ausführung von Teilmenge von Schichten nicht mehr angewandt werden.

Das Basisabbild 12 kann dem Erzeuger bzw. einer Erzeugervorrichtung, die das Containerabbild 10 erstellt, von einem Hersteller bzw. einer Herstellervorrichtung bereitgestellt werden. Die Herstellervorrichtung und die Container-Erzeugungsvorrichtung können dabei unterschiedlich physische Vorrichtungen sein, die von unterschiedlichen Parteien betrieben werden, siehe beispielsweise die. Um sicherzustellen, dass ein bestimmtes Basisabbild 12 in einem Containerabbild 10 verwendet wird, kann durch die Containersignatur 11 nicht bewerkstelligt werden. Da hier lediglich das gesamte Containerabbild 10, nicht aber einzelne Schichten 12, 13, 14 separat unterschieden werden.

Anhand des Ablaufdiagramms in Figur 2 wird nun ein Verfahren beschrieben, das es erlaubt, beim Start einer Containerinstanz aus dem Containerabbild zu überprüfen, welches Basisabbild im Containerabbild vorhanden ist und Maßnahmen abhängig von einem Prüfungsergebnis auszuführen.

Die zusätzliche Validierung des Basisabbilds wird erreicht, indem die Herstellervorrichtung des Basisabbilds eine eindeutige kryptografische Basis-Signatur über das Basisabbild erzeugt, siehe Verfahrensschritt S1.

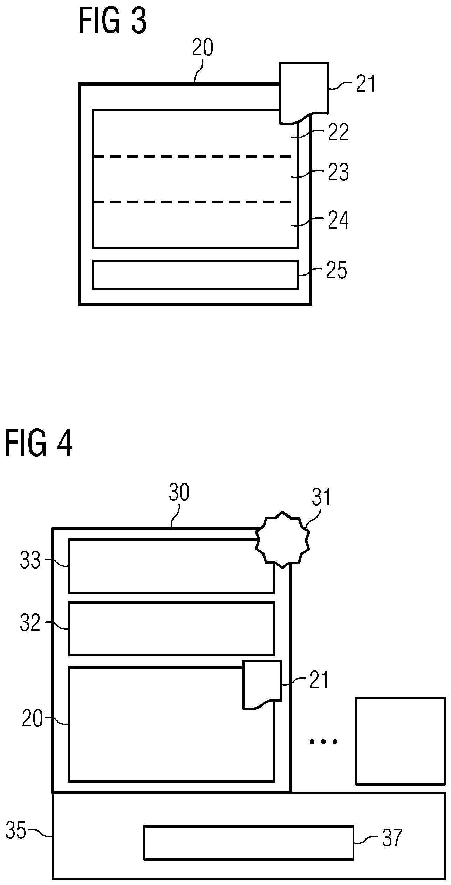

Eine beispielhafte Ausführungsform des Basisabbilds ist in Figur 3 als Basisabbild 20 dargestellt. Das Basisabbild 20 enthält mehrere Basisschichten 22, 23, 24. Diese mehreren Basisschichten 22, 23, 24 werden üblicherweise beim Erzeugen des Containerabbilds zu einer einzigen Schicht zusammengefasst. Um eine eindeutige Basis-Signatur 21 zu erzeugen, wird die Basis-Signatur über alle Basisschichten 22, 23, 24 des Basisabbilds 20 erzeugt, unabhängig davon, aus wie vielen Basisschichten das gesamte Basisabbild 20 besteht. Die Eindeutigkeit der Basis-Signatur 21 kann beispielsweise erreicht werden, indem ein gesamtes Dateisystem des Basisabbilds mit beispielsweise den jeweiligen Datumsstempeln von Dateien und Verzeichnissen, Datei- und Verzeichnisnamen oder auch die Dateigrößen der im Basisabbild enthaltenen Dateien als Basis für die Bildung der Basis-Signatur 21 verwendet wird. Die Basissignatur kann insbesondere mittels einer Hashfunktion, bevorzugt einer kryptographischen Hashfunktion erzeugt werden.

Optional können weitere Informationen zu den Basisschichten zusammen mit den genannten Informationen zum Dateisystem als Metainformation 25 im Basisabbild 20 enthalten sein.

Die Basis-Signatur 21 kann zusätzlich über mindestens einen weiteren Prüfparameter gebildet werden. Ein solcher Prüfparameter kann Informationen zur eingeschränkten oder erweiterten Ausführung von mindestens einer Änderungsoperation und/oder eingeschränkten oder erlaubten Verwendung von Ressourcen enthalten. Der mindestens eine Prüfparameter kann beispielsweise in die Metainformation 25 eingefügt werden. Die Basis-Signatur 21 wird in diesem Fall zusätzlich über die Metainformation 25 gebildet. Bei einem späteren Überprüfen der Basis-Signatur 21 durch die Laufzeitumgebung, siehe Verfahrensschritt S5, werden diese in der Metainformation enthaltenen Prüfparameter bzw. deren vorgegebene Werte oder Bedingungen gegenüber den für die Containerinstanz vorgesehenen Prüfparameter, beispielsweise den allokierten Ressourcen oder zu lesenden oder zu beschreibenden Dateien verglichen. Damit kann sichergestellt werden, dass lediglich die vorgegebenen und somit überprüft.

Der Hersteller des Basisabbilds 20 kann in der Metainformation 25 des Basisabbilds 20 spezifizieren, welche Änderungsoperationen der darüberliegende Anwendungsschichten auf dem Basisabbild 20 erlaubt sind. Beispielsweise kann spezifiziert werden, dass in den nachfolgenden Anwendungsschichten nur Operationen auf gewisse Unterpaare erlaubt sind oder bereitgestellte Binärdateien nicht überschrieben werden dürfen. Diese Erweiterung muss beim Start des Basisabbilds ebenfalls von der Laufzeitumgebung 35 validiert werden. Ein positives Prüfergebnis liegt dann vor, wenn die tatsächlich für die Containerinstanz allokierten Ressourcen oder Zugriffe auf Bibliotheken den Prüfparametern in der Signatur entsprechen.

Anschließend wird die Basis-Signatur 21 der Container-Erzeugungsvorrichtung bereitstellt, siehe Verfahrensschritt S2. Beispielsweise wird die Basis-Signatur 21 getrennt von dem Basisabbild 20 in einer für die Container-Erzeugungsvorrichtung zugänglichen Bereitstellungsvorrichtung bereitgestellt. Die Basis-Signatur 21 kann aber auch zusammen mit dem Basisabbild 20 der Container-Erzeugungsvorrichtung bereitgestellt werden.

Die Container-Erzeugungsvorrichtung erzeugt in Verfahrensschritt S3 ein Containerabbild, das mindestens das Basisabbild 20 und die über dieses Basisabbild 20 gebildete Basis-Signatur 21 umfasst. Die die Basis-Signatur 21 kann im Containerabbild als Teil der Metainformation 25 des Basisabbilds 20 angeordnet werden und somit zur Metainformation 25, die in Basisabbild enthalten ist hinzugefügt werden. Die Basis-Signatur 21 kann im Containerabbild in einer separaten dem Basisabbild 20 zugeordneten Datei angeordnet werden.

Das Containerabbild, siehe das beispielhafte Containerabbild 30 in Figur 4, enthält des Weiteren eine oder mehrere Anwendungsschichten 32, 33, die Änderungsoperationen auf dem Basisabbild 20 ausführen.

Die Erzeugungsvorrichtung des Containers und die Herstellervorrichtung des Basisabbilds können durch denselben Betreiber kontrolliert sein. Die Herstellervorrichtung und die Container-Erzeugervorrichtung können aber auch von unterschiedlichen Betreibern kontrolliert und betrieben werden.

Im Verfahrensschritt S4 wird das Containerabbild 30 an einen Gastrechner bereitgestellt. Durch die Laufzeitumgebung des Gastrechners, beispielsweise die in Figur 4 dargestellte Laufzeitumgebung 35, wird anschließend das Containerabbild 30 und insbesondere die darin enthaltene Basis-Signatur 21 überprüft, siehe Verfahrensschritt S5.

Die Überprüfung erfolgt indem in der Laufzeitumgebung 35 ebenfalls eine Signatur über das Basisabbild 20 gebildet wird und mit dem, im Containerabbild 30 dem Gastrechner bzw. der Laufzeitumgebung 35 bereitgestellten Basis-Signatur 21 verglichen wird. Stimmt die ermittelte Basis-Signatur mit der bereitgestellten Basis-Signatur 21 überein, liegt ein positives Prüfergebnis vor. Stimmt die ermittelte Basis-Signatur nicht mit der bereitgestellten Basis-Signatur 21 überein, liegt ein negatives Prüfergebnis vor. In Figur 2 ist das negative Prüfergebnis durch den mit dem Referenzzeichen "n" gekennzeichneten Pfeil, das positive Prüfergebnis durch den Pfeil mit dem Referenzzeichen "p" gekennzeichnet. Ergibt die Überprüfung der Basis-Signatur ein negatives Prüfergebnis wird eine erste Sicherheitsfunktion ausgeführt, siehe S7. Nur bei einem positiven Prüfergebnis wird die Containerinstanz gebildet und ausgeführt, siehe Verfahrensschritt S6. Eine mögliche erste Sicherheitsfunktion ist es, die Bildung der Containerinstanz basierend auf dem Containerabbild abzubrechen und/oder eine Warnmeldung auszugeben. Eine weitere erste Sicherheitsfunktion ist es eine eingeschränkte Containerinstanz zu erstellen und auszuführen.

Zusätzlich kann das Containerabbild, siehe Figur 4 selbst durch eine kryptografische Container-Signatur überprüft werden. In dieser Variante wird durch die Container-Erzeugungsvorrichtung eine kryptografische Container-Signatur 31 über das Basisabbild und die vorhandenen Anwendungsschichten erzeugt, siehe den zusätzlichen Verfahrensschritt A1 in Figur 2. Ist die Basis-Signatur 21 im Containerabbild 30 enthalten, wird die Container-Signatur 31 auch über diese Basis-Signatur 21 gebildet. Anschließend wird die Container-Signatur 31 durch die Laufzeitumgebung des Gastrechners überprüft, siehe A2. Das Containerabbild 30 wird nur dann ausgeführt, siehe A3, wenn die Überprüfung der Container-Signatur 31 ein positives Prüfergebnis ergibt, siehe A3. Das Prüfergebnis wird entsprechend der Beschreibung der Überprüfung der Basis-Signatur durch Vergleich ermittelt. Bei einem negativen Prüfergebnis wird eine zweite Sicherheitsfunktion ausgeführt.

Die Überprüfung der Container-Signatur 31 wird bevorzugt vor der Überprüfung der Basis-Signatur 21 durchgeführt. Die Überprüfung der Basis-Signatur 21 kann jedoch auch vor der Überprüfung der Container-Signatur 31 ausgeführt werden.

Die Basis-Signatur kann getrennt vom Basisabbild in einer für die Container-Erzeugungsvorrichtung zugänglichen Bereitstellungsvorrichtung bereitgestellt werden. Alternativ kann die Basis-Signatur zusammen mit dem Basisabbild an die Container-Erzeugungsvorrichtung bereitgestellt werden. Die Basis-Signatur 21 wird dann als Teil der Metainformation 25 des Basisabbilds 20, siehe Figur 3, im Containerabbild angeordnet. Alternativ kann die Basis-Signatur 21 in einer separaten, dem Basisabbild zugeordneten Datei angeordnet und die Datei im Containerabbild angeordnet werden.

Figur 4 zeigt das Containerabbild 30, das auf einer Laufzeitumgebung 35 auf einem Gastrechner, der hier nicht dargestellt ist, zur Ausführung bereitgestellt wurde. Das Containerabbild 30 enthält das Basisabbild 20 sowie die Basis-Signatur 21. Das Containerabbild 30 umfasst des Weiteren eine Container-Signatur 31, die über den gesamten Containerinhalt, das heißt das Basisabbild 20, die Basis-Signatur 21 sowie die enthaltenen Anwendungsschichten, hier eine erste und zweite Anwendungsschicht 32, 33 gebildet. Auf der Laufzeitumgebung 35 kann eine oder mehrere weitere Containerabbilder 36 ausgeführt werden.

Die Laufzeitumgebung 35 umfasst Validierungserweiterungen 37, die die Überprüfung der Basis-Signatur 21 und optional die Überprüfung der Container-Signatur 31 durchführen. Dies kann beispielsweise über eine entsprechende Zugangssteuerungseinheit, auch Admission Controller genannt, erfolgen. Alternativ können die Validierungserweiterungen 37 über ein Plug-In oder eine Codeerweiterung der Laufzeitumgebung 35 selbst realisiert werden. Zusätzlich muss zur Validierung der Basis-Signatur 21 ein kryptografischer Signaturschlüssel zur Überprüfung des Basisabbilds 20 zur Verfügung gestellt werden. Mit dem kryptografischen Signaturschlüssel kann die Laufzeitumgebung 35 selbst eine Basis-Signatur bilden und diese mit der bereitgestellten Basis-Signatur 21 vergleichen. Der kryptografische Signaturschlüssel ist bevorzugt als Schlüsselpaar umfassend einen öffentlichen und einen privaten Signaturschlüssel ausgebildet. Der privat Signaturschlüssel ist lediglich der Herstellervorrichtung bekannt, die mittels dem privaten Signaturschlüssel die kryptografische Basis-Signatur 21 erzeugt.

Bevorzugt wird jede Version des Basisabbilds 20 mit einer neue Basis-Signatur signiert, die abhängig von einem neuen privaten Signaturschlüssel erzeugt wird. Der dem privaten Signaturschlüssel zugeordnete öffentliche Signaturschlüssel wird dem Gastrechner mittels eines digitalen Zertifikats, beispielsweise entsprechend dem X.509 Standard, bereitgestellt. Der Gastrechner überprüft das digitale Zertifikat auf Gültigkeit und wendet den darin enthaltenen öffentlichen Signaturschlüssel nur dann an, wenn die Überprüfung erfolgreich war und somit das Zertifikat als gültig bestätigt wurde.

Zur Validierung des Zertifikats und damit auch zur Validierung des Basisabbildes selbst muss eine Vertrauenskette, auch Chain of Trust genannt, gebildet werden. Diese wird durch eine Kette von Zertifikaten, die jeweils die Gültigkeit des vorhergehenden Zertifikats bestätigt, gebildet. Das letzte Zertifikat bzw. die Beglaubigung in diesem Zertifikat wird als Wurzelanker oder Root-Anchor bezeichnet. Dieser Wurzelanker wird von der Herstellervorrichtung bzw. einer anderen vertrauenswürdigen Instanz des Herstellers des Basisbildes bereitgestellt. Der öffentliche Signaturschlüssel bzw. das entsprechende digitale Zertifikat wird bevorzugt mit dem Wurzelanker des Herstellers des Basisabbilds beglaubigt. In diesem Fall muss auf dem Gastrechner nur der Wurzelanker hinterlegt werden.

Anderenfalls kann eine Vertrauenskette zum Basisabbild 20 bzw. zur Basis-Signatur 21 aufgebaut werden, indem der Hersteller des Containerabbilds 30 die komplette Zertifikatskette selbst mitliefert oder die Laufzeitumgebung die Zertifikate eigenständig abruft. Da die Basis-Signatur 21 für das Basisabbild 20 nicht vom Erzeuger des Containerabbilds stammt, sondern vom Hersteller des Basisabbilds die Signatur bereitgestellt wird, können auch Sperrlisten für die Basis-Signaturen analog zu den Zertifikatsperrlisten der Zertifikate hinterlegt werden. Die Zertifikatsperrlisten werden bevorzugt auf Servern im Internet hinterlegt. Sofern die Laufzeitumgebung keine Verbindung zum Internet hat, können diese beispielsweise auch in den Metainformationen des Basisabbilds hinterlegt werden. Hiermit können dann neuere Basisabbilder beim Deployment, d.h. beim Bereitstellen auf dem Gastrechner, ältere invalidieren.

Mit Hilfe der Zertifikatsperrliste können Basis-Signaturen gesperrt werden. In diesem Fall muss neben dem Basisabbild selbst auch die Metainformation für das Basisabbild signiert werden. Das digitale Zertifikat zur Bereitstellung des öffentlichen Signaturschlüssels für die Basis-Signatur enthält weitere Zertifikatparameter, die bei der Überprüfung des Zertifikats gegenüber einer vorgegebenen Richtlinie überprüft werden. Diese Zertifikatparameter können als weitere Prüfparameter zur Freigabe des öffentlichen Signaturschlüssels und damit einer erfolgreichen Überprüfung der Basis-Signatur verwendet werden. Dabei werden diese Zertifikatparameter gegenüber einer vorgegebenen Richtlinie, die die erlaubten Bedingungen vorgibt, überprüft.

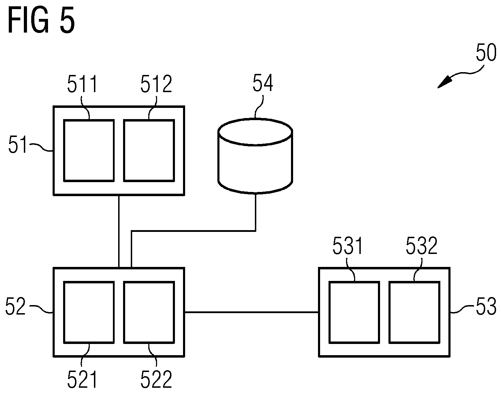

Figur 5 zeigt ein Ausführungsbeispiel eines Systems 50 mit einer Herstellervorrichtung 51, einer Container-Erzeugungsvorrichtung 52 sowie einem Gastrechner 53. Eine Bereitstellungsvorrichtung 54 ist mit der Container-Erzeugungsvorrichtung 52 verbunden. Optional kann die Bereitstellungsvorrichtung 54 auch mit dem Gastrechner 53 zur Bereitstellung der Basis-Signatur an den Gastrechner oder auch zur Übermittlung des öffentlichen Signaturschlüssels oder des entsprechenden digitalen Zertifikats verbunden sein.

Die Herstellervorrichtung 51 enthält eine Basis-Erzeugungseinheit 511 sowie eine Basis-Bereitstellungseinheit 512. Die Basis-Erzeugungseinheit 511 ist derart ausgebildet, die eindeutige kryptografische Basis-Signatur 21 über das Basisabbild 20 zu erzeugen. Die Bereitstellungseinrichtung 512 ist derart ausgebildet, die Basis-Signatur 21 an die Container-Erzeugungsvorrichtung 52 zu übermitteln.

Die Container-Erzeugungsvorrichtung 52 umfasst eine Container-Erzeugungseinheit 521, die derart ausgebildet ist, das Containerabbild 30 mit mindestens dem Basisabbild 20 und der Basis-Signatur 20 zu erzeugen. Die Container-Bereitstellungseinheit 522 ist derart konfiguriert, das Containerabbild 30 an den Gastrechner 53 bereitzustellen.

Der Gastrechner 53 umfasst eine Laufzeitumgebung 531, die die Basis-Signatur 21 im Containerabbild 30 überprüft und abhängig vom Prüfungsergebnis die Ausführung des Containerabbild 30 oder eine erste Sicherheitsfunktion in der Ausführungseinheit 532 anfordert. Die Ausführungseinheit 532 kann Teil der Laufzeitumgebung 531 sein und führt die erste Sicherheitsfunktion bzw. das Containerabbild 30 aus.

Die Funktionen der Laufzeitumgebung 531 in der Ausführungseinheit 532 können bevorzugt durch Änderungen in der Zugangssteuerung, auch Admission Controller genannt, erfolgen. Dies kann über Plug-Ins oder Codeerweiterungen der Laufzeitumgebung 531 selbst realisiert werden.

Durch das beschriebene Verfahren und das entsprechende System 50 kann auch das Basisabbild eines Containerabbilds mit Hilfe kryptografischer Signaturen validiert werden. Der Hersteller einer container-basierten Laufzeitumgebung, der ebenfalls das Basisabbild passend zur container-basierten Laufzeitumgebung bereitstellt, kann Drittherstellern vorschreiben, welches Basisabbild auf dem Gastrechner laufen darf. Durch die beschriebene Vertrauenskette können nicht mehr unterstützte Basisabbilder für die Verwendung auf dem Gast-Rechner gesperrt werden. Des Weiteren kann der Hersteller der container-basierten Laufzeitumgebung zusätzlich definieren, an welcher Stelle im Basisabbild Änderungen vorgenommen werden dürfen.

Alle beschriebenen und/oder gezeichneten Merkmale können im Rahmen der Erfindung vorteilhaft miteinander kombiniert werden. Die Erfindung ist nicht auf beschriebene Ausführungsbeispiele beschränkt.

## Patentansprüche

1. Verfahren zur erweiterten Validierung eines Containerabbilds (30), das ein Basisabbild (20) und mindestens eine Anwendungsschicht (32, 33), die mindestens eine Änderungsoperation auf dem Basisabbild (20) ausführt, aufweist, wobei das Verfahren folgende Schritte umfasst:
- Erzeugen (S1) einer eindeutigen kryptografischen Basis-Signatur (21) über das Basisabbild (20) durch eine Herstellervorrichtung (51) eines Herstellers des Basisabbilds (20),
- Bereitstellen (S2) der Basis-Signatur (21) an eine Container-Erzeugungsvorrichtung (52),
- Erzeugen (S3) eines Containerabbildes (30), das mindestens das Basisabbild (20) umfasst in der Container-Erzeugungsvorrichtung (52),
- Bereitstellen (S4) des Containerabbildes (30) an einen Gastrechner (53),
- Überprüfen (S5) der Basis-Signatur (21) im Containerabbild (30) durch eine Laufzeitumgebung (35, 531) des Gastrechners (53), und
- Ausführen (S6) des Containerabbilds nur dann, wenn die Überprüfung der Basis-Signatur (21) ein positives Prüfergebnis ergibt.

2. Verfahren nach Anspruch 1, mit den zusätzlichen Verfahrensschritten:
- Erzeugen (A1) einer kryptografischen Container-Signatur (31) über das Basisabbild (20) und/oder die Basis-Signatur (21) und mindestens eine Anwendungsschicht (32, 33) des Containerabbildes (30) durch die Container-Erzeugungsvorrichtung,
- Überprüfen (A2) der Container-Signatur durch die Laufzeitumgebung des Gastrechners, und
- Ausführen (A3) des Containerabbilds nur dann, wenn die Überprüfung der Container-Signatur (31) ein positives Prüfergebnis ergibt.

3. Verfahren nach einem der vorangehenden Ansprüche, wobei die Basis-Signatur (21) über alle Basisschichten (22, 23, 24) des Basisabbildes (20) erzeugt wird.

4. Verfahren nach einem der vorangehenden Ansprüche, wobei die Basis-Signatur (21) zusätzlich über mindestens eines aus der Auswahl von einem Erzeugungsdatum, einem Namen oder einer Dateigröße der im Basisabbild (20) enthaltenen Dateien oder mindestens einem im Basisabbild (20) enthaltenen Verzeichnis des Basisabbildes (20) erzeugt wird.

5. Verfahren nach einem der vorangehenden Ansprüche, wobei die Basis-Signatur (21) zusätzlich über mindestens einen weiteren Prüfparameter gebildet wird und die Überprüfung (S5) der Basis-Signatur (21) lediglich dann zu einem positiven Prüfergebnis führt, wenn eine Überprüfung der weiteren Prüfparameter (A4) zu einem positiven Prüfergebnis führen.

6. Verfahren nach Anspruch 5, wobei der mindestens eine weitere Prüfparameter Information zur eingeschränkten oder erweiterten Ausführung von mindestens einer Änderungsoperation und/oder eingeschränkten oder erlaubten Verwendung von Ressourcen enthält.

7. Verfahren nach einem der vorangehenden Ansprüche, wobei die Basis-Signatur (21) getrennt von dem Basisabbild (20) in einer für die Container-Erzeugungsvorrichtung (52) zugänglichen Bereitstellungsvorrichtung (54) bereitgestellt wird.

8. Verfahren nach einem der Ansprüche 1 bis 6, wobei die Basis-Signatur (21) zusammen mit dem Basisabbild (20) an die Container-Erzeugungsvorrichtung (52) bereitgestellt wird.

9. Verfahren nach einem der vorangehenden Ansprüche, wobei die Basis-Signatur (21) als Teil einer Metainformation (25) des Basisabbilds (20) oder in einer separaten dem Basisabbild zugeordneten Datei im Containerabbild angeordnet ist.

10. Verfahren nach einem der vorangehenden Ansprüche, wobei die Basis-Signatur (21) abhängig von einem privaten Signaturschlüssel erzeugt wird, und ein dem privaten Signaturschlüssel zugeordneter öffentlicher Signaturschlüssel dem Gastrechner (53) bereitgestellt wird.

11. Verfahren nach einem der vorangehenden Ansprüche, wobei jede Version eines Basisabbildes (20) mit einem neuen privaten Signaturschlüssel signiert wird.

12. Verfahren nach Anspruch 10 oder 11, wobei der öffentliche Signaturschlüssel in einem digitalen Zertifikat dem Gastrechner (53) bereitgestellt wird und der öffentliche Signaturschlüssel lediglich nach einer erfolgreichen Validierung des digitalen Zertifikates durch den Gastrechner (53) verwendet wird.

13. Verfahren nach Anspruch 12, wobei das digitale Zertifikat durch eine vertrauenswürdige Stelle eines Herstellers des Basisabbilds beglaubigt wird.

14. System zur erweiterten Validierung eines Containerabbilds (30), das ein Basisabbild (20) enthält, umfassend eine Herstellervorrichtung (51), eine Container-Erzeugungsvorrichtung (52) und einen Gastrechner (53), die derart ausgebildet sind, ein Verfahren mit nachfolgenden Verfahrensschritten auszuführen:
- Erzeugen einer eindeutigen kryptografischen Basis-Signatur (21) über das Basisabbild (20) durch die Herstellervorrichtung (51) des Herstellers des Basisabbilds (20),
- Bereitstellen der Basis-Signatur (21) an die Container-Erzeugungsvorrichtung (52),
- Erzeugen eines Containerabbildes (30), das mindestens das Basisabbild (20) und die Basis-Signatur (21) umfasst in der Container-Erzeugungsvorrichtung (52),
- Bereitstellen des Containerabbildes (30) an den Gastrechner (53),
- Überprüfen der Basis-Signatur (21) im Containerabbild (30) durch eine Laufzeitumgebung (531) im Gastrechner (53), und
- Ausführen des Containerabbilds nur dann, wenn die Überprüfung der Basis-Signatur (21) ein positives Prüfergebnis ergibt.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
